# EUROPEAN PATENT SPECIFICATION

(11) **EP 3 291 335 B1**
(45) Date of publication and mention of the grant of the patent: **11.09.2019**
(21) Application number: 15894820.8
(22) Date of filing: 08.12.2015
(51) Int. Cl.: H01M 2/30, H01M 2/04, H01M 10/04, H01M 10/42, H01M 10/48, H01M 2/08, H01M 10/0525, H02J 7/00

(54) **SECONDARY ELECTROCHEMICAL BATTERY SEALING BODY WITH CHARGE INDICATING LAMP**
ABDICHTUNGSKÖRPER EINER SEKUNDÄREN ELEKTROCHEMISCHEN BATTERIE MIT LADUNGSANZEIGELEUCHTE
CORPS HERMÉTIQUE DE CELLULE ÉLECTROCHIMIQUE SECONDAIRE PRÉSENTANT UN VOYANT LUMINEUX RECHARGEABLE

(30) Priority: 12.06.2015 CN 201510324116; 12.06.2015 CN 201520406542 U
(43) Date of publication of application: 07.03.2018
(73) Proprietor: Fujian Nanping Nanfu Battery Co., Ltd., Nanping, Fujian 353000 (CN)
(72) Inventor: CHANG, Haitao, Nanping Fujian 353000 (CN); CHEN, Jintian, Nanping Fujian 353000 (CN); SU, Sheng, Nanping Fujian 353000 (CN); YE, Yongfeng, Nanping Fujian 353000 (CN); YU, Youfeng, Nanping Fujian 353000 (CN); XU, Xiaochun, Nanping Fujian 353000 (CN)
(74) Representative: Gulde & Partner
(86) International application number: PCT/CN2015/096610
(87) International publication number: WO 2016/197565

(56) References cited:
- WO-A1-2015/039584
- CN-A- 104 054 193
- CN-A- 104 993 092
- CN-U- 202 423 479
- CN-U- 204 668 385
- JP-A- 2007 305 323
- US-A1- 2008 160 392
- US-A1- 2011 163 712

## Description

### TECHNICAL FIELD

The present invention relates to a secondary battery, and particularly to a secondary electrochemical battery sealing body with a charging indicator.

### BACKGROUND

In recent years, secondary batteries (also known as rechargeable batteries) have been widely used in various portable electric devices and electronic devices such as toys and handheld devices. This has imposed an increasingly high requirement on energy storage of the secondary batteries. Lithium-ion secondary batteries have been increasingly applied in such fields due to their advantages such as high energy, capability of high-power discharge, and environmental friendliness.

During normal operation, the rechargeable batteries often have to cooperate with integrated circuit chips with other functions to achieve desirable operation effects. Usually, the rechargeable batteries are packaged separately from the integrated circuit chips and then connected with them for use in combination through circuit boards and wires. Such products include a large number of peripheral components, require many manufacture processes, and are high in cost. Also, the rechargeable batteries and the integrated circuit chips are large in volume and relatively poor in performance, which are not beneficial for the miniaturization and microminiaturization.

In packaging the lithium-ion secondary batteries, each component of the lithium-ion secondary batteries occupies a relatively fixed space. A positive electrode tab, an isolation diaphragm, and a negative electrode tab are arranged inside a polymer battery cell, and one end of the positive electrode tab, facing away from the isolation diaphragm, is packaged by a battery cell top seal of a predefined height. As the battery cell top seal occupies a certain height of the polymer battery cell, the usable space inside the polymer battery cell is reduced. The space utilization of the polymer battery cell is substantially related to the energy density and capacity of the lithium-ion secondary batteries. Generally, the larger the space utilization of the polymer battery cell is, the higher the energy density and capacity of the lithium-ion secondary battery are. Therefore, existing lithium-ion secondary batteries all suffer from the problems of relatively low energy density and capacity due to low space utilization of the polymer battery cell.

As disclosed in an US patent document (US2008160392A1), there is a cylindrical battery. The board assembly portion includes a circuit board, a communication terminal, and an insulating formed section. A data-processing circuit is mounted on the circuit board. The insulating formed section positions the communication terminal in a predetermined position. A penetrating opening is formed in the central part of the board assembly portion to receive the protruding terminal of the base battery portion. The communication terminal that is formed in a ring shape is secured around the periphery of the penetrating opening on the upper surface side of the board assembly portion. The protruding terminal of the base battery portion has a height that protrudes from the upper surface of the board assembly portion. In the state where the board assembly portion is secured to the base battery portion, the whole cylindrical battery has the same exterior size as a standard size battery.

As disclosed in a JP patent document (JP2007305323 (A), there is a battery. To provide a battery which eliminates a need of extending a lead terminal out of the battery to be connected to a protective circuit, and allows the protective circuit to be housed in a battery case as an existing battery is hardly modified. A safety device includes a disc and a safety valve, which are insulated from each other except on a projection. A printed wiring board has a central opening, a conductive pattern on the undersurface electrically connected to the safety valve, and a conductive pattern formed on the upper surface connected to the conductive pattern on the lower surface. The printed wiring board carries thereon the protective circuit composed of a p-channel FET element which turns on and off a current path between the positive side of a power element (safety valve) and the positive output terminal of the battery (battery lid), a control circuit IC which supplies a control signal to the gate of the FET element, a fuse inserted in series to the current path, and other circuit elements.

### SUMMARY

The present invention provides a secondary electrochemical battery sealing body with a charging indicator, according to claim 1, which is used for sealing an opening portion of a battery case of a secondary electrochemical battery, wherein the sealing body includes a negative electrode cap, a circuit board module and an insulating washer. The negative electrode cap is located on an outermost side of the battery sealing body, and the circuit board module is located on an inner side of the negative electrode cap, and connected to the negative electrode cap via a connector. A charging indicator is disposed on a place, which corresponds to an edge of the negative electrode cap, on the circuit board module. A portion where the negative electrode cap and the circuit board module are connected is of a "C"-shaped annular structure, that is, a notch is formed on the edge of the negative electrode cap, the notch is a light transmission port of the charging indicator, the notch has a certain height but is not higher than the negative electrode cap, so that the charging indicator is exposed, and a position of the notch corresponds to a position of the charging indicator on the circuit board module. The insulating washer is a flexible and elastic annular insulating washer, and the insulating washer is is adapted to be arranged in gaps between the battery case and the circuit board module and between the battery case and the negative electrode cap, one segment is used to press and fix the circuit board module, and the other segment is used to isolate the battery case from the negative electrode cap, the insulating washer further completely covers the light transmission port of the charging indicator, to be adapted for sealing the negative electrode cap, the battery case and the circuit board module, and the insulating washer are made of a transparent light guiding material, so that light emitted by the charging indicator passes through the insulating washer, and the entire insulating washer is enabled to transmit the light.

Preferably, the charging indicator has at least one color.

Preferably, when the charging indicator has one color, the charging indicator constantly is turned on in the color during charging, and turned off when charging is completed.

Preferably, when the charging indicator has two colors, the charging indicator is constantly turned on in one color during charging, and constantly turned on in the other color when charging is completed.

Preferably, when a failure occurs during charging, the charging indicator blinks.

Preferably, in earlier, intermediate, later stages of charging, the charging indicator blinks at a descending frequency, and the charging indicator constantly is turned on when charging is completed.

Preferably, the circuit board module and the negative electrode cap are connected by means of soldering.

Preferably, a circuit negative electrode output terminal of the circuit board module is disposed at a portion where the negative electrode cap and the circuit board are connected, so that the same wire is used for negative electrode output and circuit grounding.

Preferably, a portion where the insulating washer is in contact with an interior portion of the battery case is arc-shaped, for fitting an arc-shaped structure of the battery case.

The sealing body is configured to seal the opening portion of the battery case of the secondary electrochemical battery, and the battery further includes a battery cell and a positive electrode cap. The positive electrode cap is connected to the battery case to constitute a positive electrode of the secondary battery. The battery cell is arranged within the battery case, and located between the positive electrode cap and the circuit board module.

A sealing body for a secondary electrochemical battery with a charging indicator of the present invention has a cleverly and reasonably designed structure in that a charging indicator is arranged on a circuit board of the electrochemical battery, which can cooperate with a transparent insulating washer at a negative electrode of the battery, so that the whole insulating washer transmits light when the battery is charged, and thus charging indicating light is more visible.

### BRIEF DESCRIPTION OF DRAWINGS

Further objects, functions, and advantages of the present invention shall become apparent from the following description of embodiments of the present invention with reference to accompanying drawings, wherein
FIG. 1a is an exploded sectional view showing an electrochemical battery sealing body according to the present invention;
FIG. 1b is a perspective view showing an electrochemical battery sealing body according to the present invention;
FIG. 1c is a top view showing an electrochemical battery sealing body according to the present invention;
FIG. 2a schematically shows a schematic structural view showing an electrochemical battery according to the present invention;
FIG. 2b is an exploded perspective view showing an electrochemical battery according to the present invention; and
FIG. 2c is a cross-sectional view along a line A-A of FIG. 1a.

### DETAILED DESCRIPTION

With reference to exemplary embodiments, objects and functions of the present invention as well as methods for achieving them shall be explained. However, the present invention is not to be limited by the exemplary embodiments disclosed below, but can be realized in various forms. The specification is intended in nature solely to provide a thorough understanding of specific details of the present invention to those skilled in the art.

It should be understood that the general description above and detailed description below are only exemplarily explanative and illustrative, and shall not be understood as limitations on the protection scope claimed by the present invention.

The embodiments of the present invention are described below with reference to the accompanying drawings. In the accompanying drawings, same reference numerals represent same or similar components, or same or similar steps.

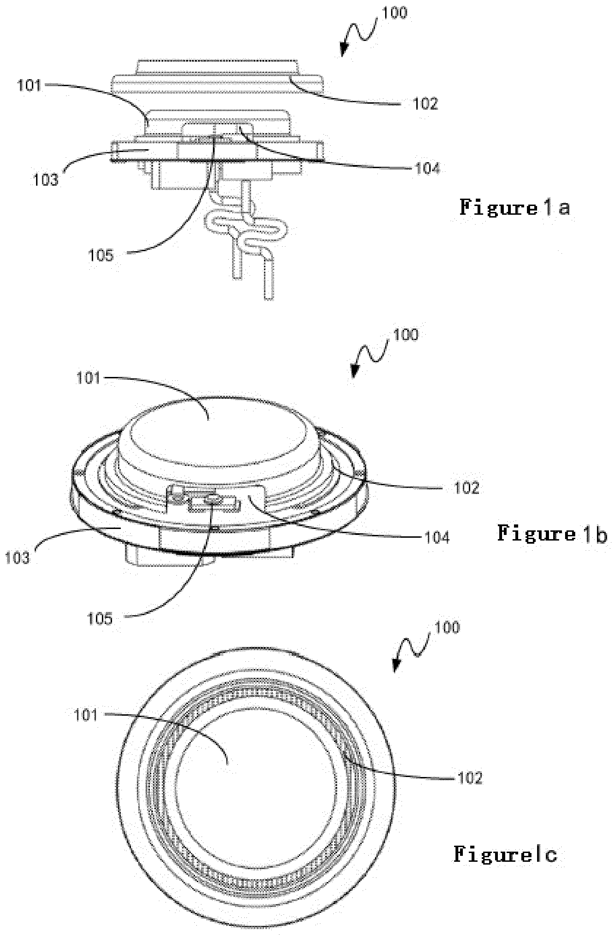

The present invention provides a secondary electrochemical battery sealing body with a charging indicator. FIG. 1a is a sectional exploded view showing a secondary electrochemical battery sealing body 100 with a charging indicator according to the present invention. FIG. 1b is a perspective view showing a secondary electrochemical battery sealing body 100 with a charging indicator according to the present invention. As shown in FIG. 1a, the sealing body 100 includes a negative electrode cap 101, an insulating washer 102, and a circuit board module 103. The negative electrode cap 101 is located on an outermost side of the battery sealing body 100. The circuit board module 103 is located on an inner side of the negative electrode cap 101, and connected to the negative electrode cap 101 via a connector. The insulating washer 102 is disposed in a gap between the circuit board module 103 and the negative electrode cap 101.

A charging indicator 105 is disposed on a portion, which corresponds to an edge of the negative electrode cap 101, on the circuit board module 103. The charging indicator 105 is an indicator having at least one color. If the charging indicator 105 has one color, the charging indicator 105 is constantly turned on in the color during charging, and turned off when charging is completed. If the charging indicator 105 has two colors, the charging indicator 105 is constantly turned on in one color during charging, and is constantly turned on in the other color when charging is complete. When the battery cannot be charged normally during charging due to a fault, the charging indicator blinks, for example, blinks five times per second. In earlier (for example, 30 %), intermediate (for example, 30 % to 60 %), and later (for example, 60 % to 99 %) stages of charging, the charging indicator blinks at a descending frequency. When charging is completed, the charging indicator is constantly turned on. For example, during charging, before a battery level reaches 30 %, the charging indicator 105 blinks three times per second. When the battery level ranges from 30 % to 60 %, the charging indicator 105 blinks twice per second. When the battery level ranges from 60 % to 99 %, the charging indicator 105 blinks once per second. When charging is completed, the charging indicator 105 is constantly turned on.

A portion where the negative electrode cap 101 and the circuit board module 103 are connected is of a "C"-shaped annular structure, that is, a notch 104 is formed on the edge of the negative electrode cap 101. The notch 104 is a light transmission port of the charging indicator 105. The notch 104 has a certain height but is not higher than the negative electrode cap, so that the charging indicator 105 is exposed. A position of the notch 104 corresponds to a position of the charging indicator 105 on the circuit board module 103. The insulating washer 102 is a flexible and elastic annular insulating padding layer, and can completely cover the light transmission port of the charging indicator 105 (as shown in FIG. lc). The insulating washer 102 is made of a transparent light guiding material, so that light emitted by the charging indicator 105 can pass through the insulating washer, and the entire insulating washer is enabled to transmit the light.

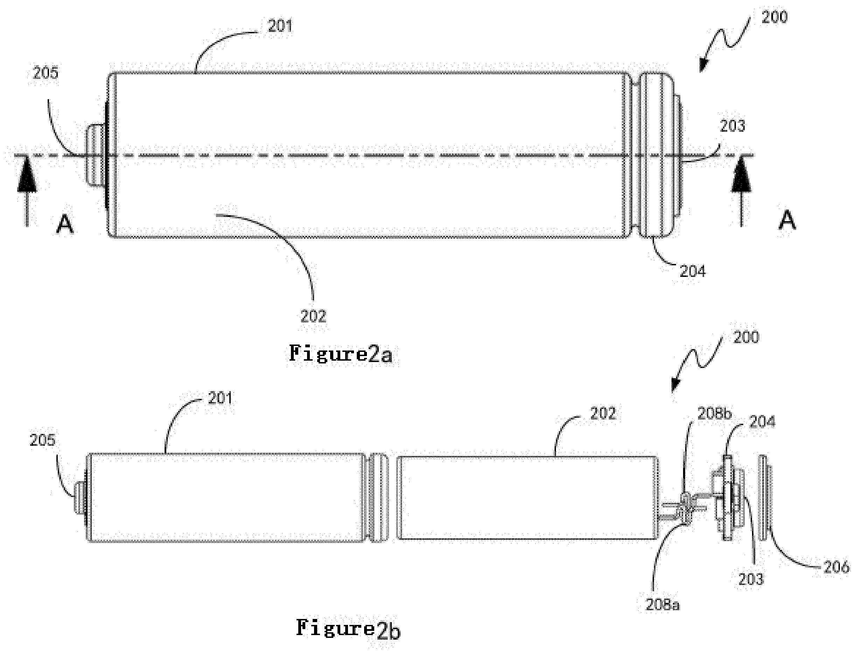

FIG. 2a and FIG. 2b are a schematic structural view and an exploded perspective view showing an electrochemical battery 200 including a secondary electrochemical battery sealing body with a charging indicator according to the present invention, respectively. As shown in FIG. 2a and FIG. 2b, the electrochemical battery 100 includes a battery case 201, a battery cell 202 arranged within the battery case 201, a negative electrode cap 203, a circuit board module 204 arranged within space between the battery cell 202 and the negative electrode cap 203, and a positive electrode cap 205. The battery cell 202 is housed in the battery case 201, and located between the positive electrode cap 205 and the circuit board module 204. The battery case 201 is a steel case with a cylinder or cuboid shaped structure for outputting a positive electrode and fixing the circuit board module 204. According to one embodiment of the present invention, the positive electrode cap 205 is rotated to the right so as to be integrally formed with the battery case 201, so as to constitute an positive electrode of the secondary battery 200.

The circuit board module 204 is at least one layer of printed circuit boards (PCBs) with a first side and a second side, wherein the first side is directed towards the negative electrode cap 203 relative to the electrochemical battery 200, and the second side is directed towards the battery cell 202 relative to the electrochemical battery 200. The PCB is a circuit board having a wiring pattern printed thereon and is of a size substantially corresponding to an inner diameter of the case for the battery 200. A plurality of printed wires and components are arranged on the first side or second side of the circuit board module 204.

The circuit board module 204 is in proximity to the side of the negative electrode cap 203 of the battery 200 and positioned between the battery cell 202 and the negative electrode cap 203. A connector is provided on the circuit board module 204 for fixing the negative electrode cap 203 onto the circuit board module 204. For example, the negative electrode cap 203 may be fixed onto the circuit board module 204 by means of soldering or alternatively by means of clamping and the like. A circuit negative electrode output terminal of the circuit board module 204 is disposed at a portion where the negative electrode cap 203 and the circuit board are connected, so that the same wire is used for negative electrode output and circuit grounding.

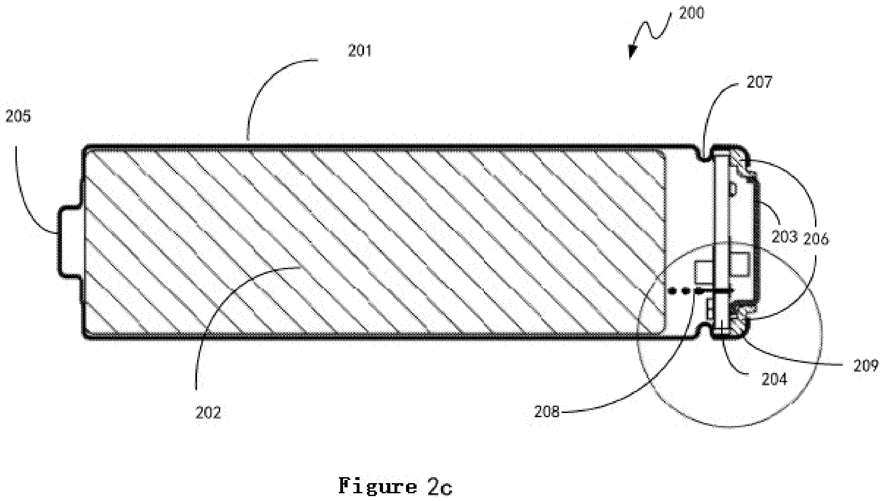

Electrode connecting wires 208a and 208b are provided between the circuit module 204 and the battery cell 202 for leading the positive electrode and a negative electrode out of the battery, respectively. The connecting wire for the positive electrode is denoted as 208a and the connecting wire for the negative electrode is denoted as 208b. FIG. 2c is a sectional view taken along a line A-A in FIG. 2a. An insulating washer 206 is provided between the circuit board module 204 and the battery case 201 outside, and between the negative electrode cap 203 and the battery case 201. The insulating washer 206 is a flexible and elastic annular insulating padding layer, and can play a role of isolating the battery case 201 that serves as a first electrode from the negative electrode cap 203 that serves as a second electrode, and can press and fix the circuit board module 204 due to the elasticity of the insulating padding layer to seal the gap between the battery case 201 and the negative electrode cap 203. Particularly, as shown in FIG. 2c, one segments of the insulating washer206 are used to press and fix the circuit board module 204 between the loop line 207 and the battery case 201, and the other segments of the insulating washer 206 are used to isolate the battery case 201 from the negative electrode cap 203.

A loop line207 is formed as an annular inward recess on an outer surface, corresponding to a location between the battery cell 202 and the printed circuit board, of the battery case 201. The battery cell 202 is arranged within the battery case 201 and positioned between the positive electrode cap 205 and the loop line 207 structure. The insulating washer 206 and the loop line 207 are arranged in such a manner that the circuit board module 204 is fixed between the annular recess of the battery case 201 and the bottom of the battery case 201. Therefore, the battery case 201 and the negative electrode cap 203 are connected without any soldering.

The loop line 207 structure is configured to position the circuit board module 204. Particularly, the circuit board module 204 is configured with the diameter thereof being sized between an inner diameter of the annular recess constituted by the loop line 207 and an inner diameter of the battery case 201. When the battery is assembled, the battery cell 202 is arranged in the battery case 201; then the circuit board module 204 is assembled into the battery case 201, the circuit board module 204 is sized so that it can be engaged onto the loop line 207 structure, thereby avoiding being in contact with the battery cell 202; and then the battery case 201 is isolated from the negative electrode cap 203 through the insulating padding layer. As such, the assembly of the battery 200 is completed. Such a structure allows the circuit board module 204 to form an enclosed space inside the battery case 201 for accommodating the battery cell 202 by means of the loop line 207 structure, therefore the volume of the battery cell 202 and thus the capacity of the secondary battery can be increased. Preferably, the battery cell 202 has a sealed structure and can be operated by leading a positive electrode and a negative electrode of the battery cell 202 out of the battery cell 202 so as to be connected to the positive electrode and the negative electrode of the battery respectively.

Preferably, the loop line 207 has a recess depth of 0.2 mm to 1.2 mm relative to the surface of the battery case 201.

A sealing body for a secondary electrochemical battery with a charging indicator of the present invention has a cleverly and reasonably designed structure in that a charging indicator is arranged on a circuit board of the electrochemical battery, which can cooperate with a transparent insulating washer at a negative electrode of the battery, so that the whole insulating washer transmits light when the battery is charged, and thus charging indicating light is more visible.

Other embodiments of the present invention can readily occur to and be understood by those skilled in the art in light of the description and practice of the present invention disclosed herein. Such description and embodiments are solely meant to be illustrative and the true scope of the present invention shall be defined by the claims.

## Claims

1. A secondary electrochemical battery sealing body (100) with a charging indicator(105), the sealing body is configured to seal an opening portion of a battery case of a secondary electrochemical battery, and the sealing body comprises a negative electrode cap (101), a circuit board module (103) and insulating washer (102),
the negative electrode cap (101) is located on an outermost side of the battery sealing body (100), and the circuit board module (103) is located on an inner side of the negative electrode cap (101), and connected to the negative electrode cap (101) via a connector;
a charging indicator (105) is disposed on a place, which corresponds to an edge of the negative electrode cap (101), on the circuit board module (103);
a portion where the negative electrode cap (101) and the circuit board module (103) are connected is of a "C"-shaped annular structure, that is, a notch (104) is formed on the edge of the negative electrode cap (101), the notch is a light transmission port of the charging indicator (105), the notch has a certain height but is not higher than the negative electrode cap (101), so that the charging indicator (105) is exposed, and a position of the notch corresponds to a position of the charging indicator (105) on the circuit board module (103); and
the insulating washer (102) is a flexible and elastic annular insulating washer, and the insulating washer is adapted to be arranged in gaps between the battery case and the circuit board module and between the battery case and the negative electrode cap, one segment of the insulating washer is adapted to press and fix the circuit board module, and an other segment is adapted to isolate the battery case from the negative electrode cap (101), the insulating washer (102) further completely covers the light transmission port of the charging indicator (105), to be adapted for sealing the negative electrode cap (101) the battery case and the circuit board module, and the insulating washer (102) is made of a transparent light guiding material, so that light emitted by the charging indicator passes through the insulating washer, and the entire insulating washer is enabled to transmit the light.

2. The secondary electrochemical battery sealing body according to claim 1, wherein the charging indicator (105) has at least one color.

3. The secondary electrochemical battery sealing body according to claim 2, wherein when the charging indicator (105) has one color, the charging indicator is constantly turned on in the color during charging, and turned off when charging is completed.

4. The secondary electrochemical battery sealing body according to claim 2, wherein when the charging indicator (105) has two colors, the charging indicator is constantly turned on in one color during charging, and constantly turned on in the other color when charging is completed.

5. The secondary electrochemical battery sealing body according to claim 2, wherein when a failure occurs during charging, the charging indicator (105) blinks.

6. The secondary electrochemical battery sealing body according to claim 2, wherein in earlier, intermediate, later stages of charging, the charging indicator (105) blinks at a descending frequency, and the charging indicator is constantly turned on when charging is completed.

7. The secondary electrochemical battery sealing body according to claim 1, wherein the circuit board module (103) and the negative electrode cap (101) are connected by means of soldering.

8. The secondary electrochemical battery sealing body according to claim 1, wherein a circuit negative electrode output of the circuit board module (103) is disposed at a portion where the negative electrode cap (101) and the circuit board are connected, so that the same wire is used for negative electrode output and circuit grounding.

9. A secondary electrochemical battery (200) comprising the battery sealing body according to claim 1, wherein the sealing body is configured to seal an opening portion of a battery case (201) of the secondary electrochemical battery, and the secondary electrochemical battery further comprises a battery cell (202) and a positive electrode cap (205), wherein,
the positive electrode cap (205) is connected to the battery case (201) to constitute a positive electrode of the secondary electrochemical battery; and
the battery cell (202) is arranged within the battery case (201), and located between the positive electrode cap (205) and the circuit board module.

## Patentansprüche

1. Sekundärer elektrochemischer Batteriedichtungskörper (100) mit einem Ladeanzeiger (105), wobei der Dichtungskörper dazu konfiguriert ist, einen Öffnungsabschnitt eines Batteriegehäuses einer sekundären elektrochemischen Batterie zu dichten, und wobei der Dichtungskörper eine negative Elektrodenkappe (101), ein Leiterplattenmodul (103) und eine Isolierscheibe (102) umfasst,
und wobei die negative Elektrodenkappe (101) sich an einer äußersten Seite des Batteriedichtungskörpers (100) befindet und das Leiterplattenmodul (103) sich an einer Innenseite der negativen Elektrodenkappe (101) befindet und mit dem negativen Elektrodenkappe (101) über einen Verbinder verbunden ist;
und wobei ein Ladeanzeiger (105) an einer Stelle angeordnet ist, die einer Kante der negativen Elektrodenkappe (101) auf dem Leiterplattenmodul (103) entspricht;
wobei ein Abschnitt, in dem die negative Elektrodenkappe (101) und das Leiterplattenmodul (103) verbunden sind, eine "C"-förmige ringförmige Struktur aufweist, das heißt, eine Kerbe (104) ist an der Kante der negativen Elektrodenkappe (101) ausgebildet, wobei die Kerbe ein Lichtübertragungsanschluss des Ladeanzeigers (105) ist, und wobei die Kerbe eine bestimmte Höhe hat und jedoch nicht höher als die negative Elektrodenkappe (101) ist, so dass der Ladeanzeiger (105) exponiert ist und eine Position der Kerbe einer Position des Ladeanzeigers (105) auf dem Leiterplattenmodul (103) entspricht;
und wobei die Isolierscheibe (102) eine flexible und elastische, ringförmige Isolierscheibe ist, und wobei die Isolierscheibe ist dazu angepasst, in Spalten zwischen dem Batteriegehäuse und dem Leiterplattenmodul und zwischen dem Batteriegehäuse und der negativen Elektrodenkappe angeordnet zu sein, und wobei ein Segment der Isolierscheibe dazu angepasst ist, das Leiterplattenmodul zu pressen und zu fixieren, während ein anderes Segment dazu angepasst, ist, das Batteriegehäuse von der negativen Elektrodenkappe (101) zu isolieren, und wobei die Isolierscheibe (102) den Lichtübertragungsanschluss des Ladeanzeigers weiter vollständig abdeckt (105), um die negative Elektrodenkappe (101), das Batteriegehäuse und das Leiterplattenmodul abzudichten, und wobei die Isolierscheibe (102) aus einem transparenten Lichtleitermaterial hergestellt ist, so dass von dem Ladeanzeiger emittiertes Licht durch die Isolierscheibe durchläuft und die gesamte Isolierscheibe das Licht durchlassen kann.

2. Sekundärer elektrochemischer Batteriedichtungskörper nach Anspruch 1, wobei der Ladeanzeiger (105) mindestens eine Farbe aufweist.

3. Sekundärer elektrochemischer Batteriedichtungskörper nach Anspruch 2, wobei, wenn der Ladeanzeiger (105) eine Farbe aufweist, der Ladeanzeiger während des Aufladens konstant in der Farbe eingeschaltet und nach Abschluss des Aufladevorgangs ausgeschaltet ist.

4. Sekundärer elektrochemischer Batteriedichtungskörper nach Anspruch 2, wobei, wenn der Ladeanzeiger (105) zwei Farben aufweist, der Ladeanzeiger während des Aufladevorgangs konstant in einer Farbe eingeschaltet und nach Abschluss des Aufladevorgangs konstant in der anderen Farbe eingeschaltet ist.

5. Sekundärer elektrochemischer Batteriedichtungskörper nach Anspruch 2, wobei, wenn ein Fehler während des Aufladevorgangs auftritt, der Ladeanzeiger (105) blinkt.

6. Sekundärer elektrochemischer Batteriedichtungskörper nach Anspruch 2, wobei in früheren, mittleren und späteren Ladestufen der Ladeanzeiger (105) mit einer absteigenden Frequenz blinkt und der Ladeanzeiger konstant eingeschaltet ist, wenn der Aufladevorgang abgeschlossen ist.

7. Sekundärer elektrochemischer Batteriedichtungskörper nach Anspruch 1, wobei das Leiterplattenmodul (103) und die negative Elektrodenkappe (101) durch Löten verbunden sind.

8. Sekundärer elektrochemischer Batteriedichtungskörper nach Anspruch 1, wobei ein negativer Schaltungselektrodenausgang des Leiterplattenmoduls (103) an einem Abschnitt angeordnet ist, an dem die negative Elektrodenkappe (101) und die Leiterplatte miteinander verbunden sind, so dass der gleiche Draht für den negativen Elektrodenausgang und für die Erdung des Schaltkreises verwendet wird.

9. Sekundäre elektrochemische Batterie (200), umfassend den Batteriedichtungskörper nach Anspruch 1, wobei der Dichtungskörper dazu konfiguriert ist, um einen Öffnungsabschnitt eines Batteriegehäuses (201) der sekundären elektrochemischen Batterie abzudichten, wobei die sekundäre elektrochemische Batterie weiterhin eine Batteriezelle (202) und eine positive Elektrodenkappe (205) umfasst, und wobei die positive Elektrodenkappe (205) mit dem Batteriegehäuse (201) verbunden ist, um eine positive Elektrode der sekundären elektrochemischen Batterie zu bilden; und wobei die Batteriezelle (202) innerhalb des Batteriegehäuses (201) angeordnet ist und sich zwischen der positiven Elektrodenkappe (205) und dem Leiterplattenmodul befindet.

## Revendications

1. Un corps de scellage d'accumulateur électrochimique (100) avec un indicateur de chargement (105), le corps de scellage est configuré pour sceller une portion d'ouverture d'un boîtier d'accumulateur d'un accumulateur électrochimique, et le corps de scellage comprend un capuchon d'électrode négative (101), un module de carte de circuit imprimé (103), et une rondelle isolante (102),
le capuchon d'électrode négative (101) est situé sur un côté le plus à l'extérieur du corps de scellage d'accumulateur (100), et le module de carte de circuit imprimé (103) est situé sur un côté intérieur du capuchon d'électrode négative (101) et connecté au capuchon d'électrode négative (101) via un connecteur;
un indicateur de chargement (105) est disposé sur an emplacement sur le module de carte de circuit imprimé (103) qui correspond à un bord du capuchon d'électrode négative (101);
une portion où le capuchon d'électrode négative (101) et le module de carte de circuit imprimé (103) sont connectés est d'une structure annulaire d'une forme en C, c'est-à-dire que, un cran (104) est formé sur le bord du capuchon d'électrode négative (101), le cran est un port d'émission de lumière de l'indicateur de chargement (105), et le cran a une certaine hauteur mais n'est pas plus haut que le capuchon d'électrode négative (101), de sorte que l'indicateur de chargement (105) est exposé, et une position du cran correspond à une position de l'indicateur de chargement (105) sur le module de carte de circuit imprimé (103); et
la rondelle isolante (102) est une rondelle isolante annulaire flexible et élastique, et la rondelle isolante est adaptée à être disposée dans des jeux entre le boîtier d'accumulateur et le module de carte de circuit imprimé et entre le boîtier d'accumulateur et le capuchon d'électrode négative, un segment de la rondelle isolante est adapté à appuyer sur et fixer le module de carte de circuit imprimé, et un autre segment est adapté à isoler le boîtier d'accumulateur du capuchon d'électrode négative (101), la rondelle isolante (102) en outre couvre complètement le port d'émission de lumière de l'indicateur de chargement (105), pour être adapté à sceller le capuchon d'électrode négative (101), le boîtier d'accumulateur, et le module de carte de circuit imprimé, et la rondelle isolante (102) est réalisée en un matériau transparent de guidage de lumière, de sorte que la lumière émise par l'indicateur de chargement passe à travers la rondelle isolante, et la rondelle isolante entière est permise de transmettre de la lumière.

2. Le corps de scellage d'accumulateur électrochimique selon revendication 1, dans lequel, l'indicateur de chargement (105) a au moins une couleur.

3. Le corps de scellage d'accumulateur électrochimique selon revendication 2, dans lequel, lorsque l'indicateur de chargement (105) a une couleur, l'indicateur de chargement est constamment allumé dans la couleur durant un chargement, et éteint lorsque le chargement est complété.

4. Le corps de scellage d'accumulateur électrochimique selon revendication 2, dans lequel, lorsque l'indicateur de chargement (105) a deux couleurs, l'indicateur de chargement est constamment allumé dans une couleur durant un chargement, et constamment allumé dans l'autre couleur lorsque le chargement est complété.

5. Le corps de scellage d'accumulateur électrochimique selon revendication 2, dans lequel, lorsqu'une défaillance se produit pendant un chargement, l'indicateur de chargement (105) clignote.

6. Le corps de scellage d'accumulateur électrochimique selon revendication 2, dans lequel, dans des phases plus tôt, intermédiaire, et plus tard d'un chargement, l'indicateur de chargement (105) clignote à une fréquence décroissante, et l'indicateur de chargement est constamment allumé lorsque le chargement est complété.

7. Le corps de scellage d'accumulateur électrochimique selon revendication 1, dans lequel, le module de carte de circuit imprimé (103) et le capuchon d'électrode négative (101) sont connectés au moyen d'un soudage.

8. Le corps de scellage d'accumulateur électrochimique selon revendication 1, dans lequel, une sortie d'électrode négative de circuit du module de carte de circuit imprimé (103) est disposée à une portion où le capuchon d'électrode négative (101) et la carte de circuit imprimé sont connectés, de sorte qu'un même fil est utilisé pour la sortie d'électrode négative et la mise à la terre de circuit.

9. Un accumulateur électrochimique (200) comprenant le corps de scellage d'accumulateur selon revendication 1, dans lequel, le corps de scellage est configuré pour sceller une portion d'ouverture d'un boîtier d'accumulateur (201) de l'accumulateur électrochimique, et l'accumulateur électrochimique comprend en outre une cellule d'accumulateur (202) et un capuchon d'électrode positive (205), dans lequel,
le capuchon d'électrode positive (205) est connecté au boîtier d'accumulateur (201) pour constituer une électrode positive de l'accumulateur électrochimique; et
la cellule d'accumulateur (202) est disposée au sein du boîtier d'accumulateur (201), et située entre le capuchon d'électrode positive (205) et le module de carte de circuit imprimé.
